# EUROPÄISCHE PATENTSCHRIFT

(11) **EP 3 828 840 B1**
(45) Veröffentlichungstag und Bekanntmachung des Hinweises auf die Patenterteilung: **23.04.2025**
(21) Anmeldenummer: 20209105.4
(22) Anmeldetag: 22.11.2020
(51) Int. Cl.: G07C 5/08, G07C 5/00, B64D 25/08

(54) **DATENERFASSUNGSSYSTEM ZUM ERFASSEN VON FAHRZEUGDATEN EINES FAHRZEUGS SOWIE VERFAHREN ZUM ERFASSEN VON FAHRZEUGDATEN**
DATA ACQUISITION SYSTEM FOR DETECTING VEHICLE DATA OF A VEHICLE AND METHOD FOR DETECTING VEHICLE DATA
SYSTÈME D'ENREGISTREMENT DE DONNÉES PERMETTANT D'ENREGISTRER LES DONNÉES DE VÉHICULE D'UN VÉHICULE AINSI QUE PROCÉDÉ D'ENREGISTREMENT DE DONNÉES DE VÉHICULE

(30) Priorität: 26.11.2019 DE 102019131993
(43) Veröffentlichungstag der Anmeldung: 02.06.2021
(73) Patentinhaber: Airbus Defence and Space GmbH, 82024 Taufkirchen (DE)
(72) Erfinder: Schmidt, Rene, 82024 Taufkirchen (DE)
(74) Vertreter: LKGLOBAL Lorenz & Kopf Patentanwalt Attorney at Law PartG mbB

(56) Entgegenhaltungen:
- WO-A1-2018/140069
- WO-A1-2019/178637
- US-A1- 2016 318 616
- US-A1- 2017 029 128
- US-A1- 2019 315 462

## Beschreibung

### Gebiet der Erfindung

Die vorliegende Erfindung betrifft die Datenerfassung in Fahrzeugen, beispielsweise Luftfahrzeugen. Insbesondere betrifft die Erfindung ein Datenerfassungssystem zum Erfassen von Fahrzeugdaten eines Fahrzeugs sowie ein Verfahren zum Erfassen von Fahrzeugdaten eines Fahrzeugs.

### Hintergrund der Erfindung

Üblicherweise umfassen Luftfahrzeuge, insbesondere Passagier- oder Transportflugzeuge, heutzutage einen Rekorder zum Aufzeichnen von Stimmen und Geräuschen an Bord des Flugzeugs, welcher umgangssprachlich auch als "Black-Box" bezeichnet wird. Ein solcher Rekorder zeichnet in der Regel Daten auf, die während des Fluges erfasst werden. Dies können beispielsweise Daten bezüglich von Piloten vorgenommener Eingaben sowie Daten bezüglich Flugparametern sein. Der Rekorder kann im Falle des Verlustes des Luftfahrzeugs geborgen werden, um anschließend auf Basis der aufgezeichneten Daten die Ursache des Verlustes des Luftfahrzeugs zu ergründen. Jedoch kann nicht ausgeschlossen werden, dass auch der Datenrekorder beim Verlust des Luftfahrzeugs zerstört wird oder Daten auf dem Rekorder zumindest teilweise nicht mehr ausgelesen werden können.

Beispielsweise beschreibt die DE 10 2013 205 004 A1 ein Flugzeug mit einem Flugschreiber und ein Verfahren zum Auslesen von Flugdaten aus einem Flugschreiber, insbesondere bei unterwassertauglichen Flugschreibern.

Die EP 3 364 375 A1 beschreibt eine Vorrichtung zum Aufzeichnen von Flugzeugdaten. Die Vorrichtung umfasst einen primären Flugdatenrekorder zum Aufzeichnen von Daten, die von Flugzeugsystemen während des Betriebs eines Flugzeugs erzeugt werden, und einen sekundären Flugdatenrekorder in Kommunikation mit dem primären Flugdatenrekorder. Der sekundäre Flugdatenrekorder ist konfiguriert, um Daten von dem primären Flugdatenrekorder zu empfangen und zu speichern. Der sekundäre Flugdatenrekorder ist aus dem Flugzeug auswerfbar und umfasst ein Antriebssystem, um einen angetriebenen Flug des sekundären Flugdatenrekorders zu ermöglichen.

US 2017 / 0 029 128 A1 beschreibt ein System zur schnellen Trennung eines Flugdatenschreibers von einem Flugzeug. Es umfasst einen Flugdatenschreiber, ein Notfallerfassungssystem mit mehreren Sensoren zum Erfassen von Flugparametern und mindestens einen Computerprozessor zum Analysieren der Flugparameter und Bestimmen, basierend auf der Analyse, dass ein Notfallereignis auftritt. Ein Schnellauswurfsystem umfasst ein pneumatisches System, das konfiguriert ist, um den Flugdatenschreiber aus einer Öffnung in einem Gehäuse und durch die Haut des Flugzeugs auszuwerfen, wenn das Notfallerfassungssystem feststellt, dass das Notfallereignis auftritt. Ein Landesystem ist an dem Flugdatenschreiber angebracht und konfiguriert, um die Aufprallkraft bei der Landung zu verringern und den Auftrieb des Flugdatenschreibers zu erhöhen.

US 2016 / 0318 616 A1 beschreibt ein Flugdatenspeichermodul mit einer Datenspeichereinrichtung zum Speichern von Daten, eine Datenempfangseinrichtung zum Empfangen der Daten und eine die Datenspeichereinrichtung umschließende Hülle. Die Hülle weist eine kugelige, ellipsoide, eiförmige und/oder abgerundete konvexe Wand auf.

Eine Flugdatenspeichereinrichtung weist mehrere Flugdatenspeichermodule, eine Aufnahme zum Anordnen der mehreren Flugdatenspeichermodule in und/oder an einem Flugzeug und eine Auswerfereinrichtung zum mechanischen Auswerfen der Flugdatenspeichermodule auf. Ein Flugdatenspeichersystem umfasst eine Flugdatenspeichereinrichtung, eine Datensammeleinrichtung zum Sammeln von Daten in einem Flugdatensystem und eine Datenübertragungseinrichtung zum Übertragen der durch die Datensammeleinrichtung gesammelten Daten an mindestens eines der Flugdatenspeichermodule.

### Zusammenfassung der Erfindung

Es ist eine Aufgabe der vorliegenden Erfindung, die Menge der während eines Fluges erfassten Flugdaten eines Luftfahrzeugs zu maximieren.

Diese Aufgabe wird durch die Gegenstände der unabhängigen Ansprüche gelöst. Beispielhafte Ausführungsformen ergeben sich aus den abhängigen Ansprüchen und der nachfolgenden Beschreibung.

Gemäß einem Aspekt der Erfindung ist ein Datenerfassungssystem zum Erfassen von Fahrzeugdaten eines Fahrzeugs, insbesondere eines Luftfahrzeugs, angegeben. Das Datenerfassungssystem weist eine erste Datenerfassungseinheit auf sowie eine zweite Datenerfassungseinheit, welche über eine Datenverbindung mit der ersten Datenerfassungseinheit verbunden ist, um somit Fahrzeugdaten von der ersten Datenerfassungseinheit an die zweite Datenerfassungseinheit zu übertragen. Das Datenerfassungssystem weist ferner einen Befestigungsmechanismus auf, der dazu ausgeführt ist, die zweite Datenerfassungseinheit in einem befestigten Zustand an dem Fahrzeug zu befestigen. Das Datenerfassungssystem weist auch einen Lösemechanismus auf, der dazu ausgeführt ist, die Befestigung der zweiten Datenerfassungseinheit an dem Fahrzeug zu lösen und die zweite Datenerfassungseinheit in einen gelösten Zustand zu verbringen, in dem die zweite Datenerfassungseinheit von dem Fahrzeug räumlich getrennt ist. Der Lösemechanismus ist ferner dazu ausgeführt, die Befestigung der zweiten Datenerfassungseinheit an dem Fahrzeug basierend einer Prognose für einen Fahrzeugzustand des Fahrzeugs zu lösen. Die zweite Datenerfassungseinheit ist dazu ausgeführt, die Datenverbindung zum Übertragen der Fahrzeugdaten zwischen der ersten Datenerfassungseinheit und der zweiten Datenerfassungseinheit in dem gelösten Zustand mittels einer Funkverbindung mindestens so lange aufrechtzuerhalten, bis die zweite Datenerfassungseinheit ein Abbruchsignal von der ersten Datenerfassungseinheit empfängt.

Durch die zweite Datenerfassungseinheit kann somit eine Speichereinheit für Fahrzeugdaten bereitgestellt, die auch im Falle eines Verlustes der ersten Datenerfassungseinheit gesichert bzw. gerettet werden kann, da die zweite Datenerfassungseinheit noch vor einem vollständigen Verlust des Fahrzeugs von diesem abgeworfen und damit räumlich von diesem getrennt wird. Mit dem erfindungsgemäßen Datenerfassungssystem ist es daher möglich, dass Daten, beispielsweise Flugdaten, durch die zweite Datenerfassungseinheit aufgezeichnet werden können, bis die erste Datenerfassungseinheit tatsächlich kein Signal mehr absendet bzw. diese zerstört ist. Die Datenerfassung durch die gelöste, das heißt abgeworfene, zweite Datenerfassungseinheit kann insbesondere auch über sehr große Distanzen, zum Beispiel mehrere Kilometer, erfolgen, indem die erste Datenerfassungseinheit eine Datenverbindung, das heißt die Funkverbindung, zu der zweiten Datenerfassungseinheit nach dem Lösen der zweiten Datenerfassungseinheit von dem Fahrzeug über mehrere Kilometer hinweg aufrechterhält.

Durch das erfindungsgemäße Datenerfassungssystem kann insbesondere erreicht werden, dass die zweite Datenerfassungseinheit frühzeitig abgeworfen werden kann, um das Risiko eines Verlustes der zweiten Datenerfassungseinheit zu minimieren. Dabei kann mittels der Prognose auf den frühestmöglichen Abwurfzeitpunkt abgestellt werden, da die Prognose einen Aufschluss darüber gibt, ob ein Verlust des Fahrzeugs noch vermeidbar ist oder nicht. Falls ein solcher Verlust nicht mehr vermeidbar ist, wird die zweite Datenerfassungseinheit sofort abgeworfen, so dass eine räumliche Trennung zwischen dem Fahrzeug einschließlich der ersten Datenerfassungseinheit und der zweiten Datenerfassungseinheit frühestmöglich erfolgt. Die Funkverbindung sichert dabei auch nach dem Lösen die weitergehende und aufrechterhaltene Kommunikation zwischen der ersten und der zweiten Datenerfassungseinheit. Mit anderen Worten wird das Risiko eines Verlustes auch der zweiten Datenerfassungseinheit und der darauf gespeicherten Daten durch den frühzeitigen Abwurf und die eigens hergestellte Funkverbindung minimiert. Insbesondere können somit Bergungsarbeiten und damit verbundene Kosten verringert werden. Zudem wird die Menge an geretteten Daten vom Fahrzeug maximiert. Es wird sichergestellt, dass die zweite Datenerfassungseinheit stets außerhalb, also getrennt, vom Fahrzeug geborgen werden kann. Beispielsweise können aufwändige Unterwasserbergungsarbeiten vermieden werden. Außerdem wird sichergestellt, dass zu dem Zeitpunkt, an dem die erste Datenerfassungseinheit nicht mehr sendet, die zweite Datenerfassungseinheit einen kompletten und gesicherten Datensatz vom Fahrzeug aufweist.

Die Datenverbindung kann während des befestigten Zustandes und auch während des gelösten Zustandes der zweiten Datenerfassungseinheit bestehen. Dabei kann im befestigten Zustand eine drahtlose Datenverbindung oder eine drahtgebundene Datenverbindung zwischen der ersten und zweiten Datenerfassungseinheit vorliegen. Im gelösten Zustand, das heißt nachdem die zweite Datenerfassungseinheit von dem Fahrzeug getrennt wurde, wird eine drahtlose Datenverbindung aufgebaut, insbesondere eine Funkverbindung zwischen der ersten und zweiten Datenerfassungseinheit hergestellt.

Die Befestigung der zweiten Datenerfassungseinheit im befestigten Zustand kann mittels mechanischer oder magnetischer Befestigungsmittel erfolgen. Die Befestigung kann zum Beispiel eine lösbare Schrauben- oder Stiftverbindung, oder aber auch eine Klebeverbindung aufweisen. Jedenfalls ist die Befestigung derart ausgestaltet, dass die zweite Datenerfassungseinheit unmittelbar nach Erkennen eines unvermeidbaren Verlustes des Fahrzeugs, beispielsweise eines Absturzes des Luftfahrzeugs, von dem Fahrzeug abgelöst werden kann. Dazu ist ein Lösemechanismus vorgesehen, der die zweite Datenerfassungseinheit in die Umgebung abwerfen oder sogar absprengen kann. Dazu kann der Lösemechanismus zum Beispiel eine Sprungfeder zum Abwerfen der zweiten Datenerfassungseinheit aufweisen oder eine Sprengvorrichtung zum Absprengen der zweiten Datenerfassungseinheit. Durch das Lösen der zweiten Datenerfassungseinheit wird die zweite Datenerfassungseinheit räumlich von dem Fahrzeug separiert, was bedeutet, dass die zweite Datenerfassungseinheit physisch von dem Fahrzeug entfernt wird.

Das Lösen, also das Überführen der zweiten Datenerfassungseinheit von dem befestigten Zustand in den gelösten Zustand kann dabei auf Basis einer Prognose für einen Fahrzeugzustand des Fahrzeugs erfolgen. Diese Prognose kann darauf hinweisen, dass aufgrund des derzeitigen Fahrzeugzustands, beispielsweise aufgrund der Geschwindigkeit, der Position oder der Lage, ein zukünftiger Verlust bzw. ein Absturz des Fahrzeugs unvermeidbar ist. In solch einem Fall, wird unmittelbar der Lösemechanismus aktiviert und die zweite Datenerfassungseinheit vom Fahrzeug abgelöst, um die bisher durch die erste Datenerfassungseinheit gesammelten Fahrzeugdaten zu sichern bzw. zu retten, da die erste Datenerfassungseinheit mit dem Verlust des Fahrzeugs ebenfalls zerstört werden könnte.

In einem Beispiel ist die erste Datenerfassungseinheit fester Bestandteil des Fahrzeugs und fest, das heißt nicht abwerfbar, in das Fahrzeug integriert. Die erste Datenerfassungseinheit kann insbesondere ein sich an Bord des Fahrzeugs befindender Rekorder zum Aufzeichnen von Stimmen und Geräuschen an Bord des Flugzeugs sein und kann umgangssprachlich auch als sog. "Black-Box" oder "Cockpit Voice and Data Recorder" (CVDR) bezeichnet werden. Mit anderen Worten ist die erste Datenerfassungseinheit nicht für den Abwurf von Bord des Fahrzeugs vorgesehen, wie dies bei der zweiten Datenerfassungseinheit der Fall ist. Die zweite Datenerfassungseinheit ist dagegen für einen solchen Abwurf vorgesehen, ist automatisch entfernbar vom Fahrzeug und kann daher auch als "Automatic Deployable Flight Recorder" (ADFR) bezeichnet werden.

Es ist vorgesehen, dass die von der ersten Datenerfassungseinheit erfassten Borddaten sowie Stimm- und Geräuschdaten an Bord des Fahrzeugs, insbesondere im Cockpit des Fahrzeugs, stets bzw. kontinuierlich an die zweite Datenerfassungseinheit übertragen werden, so dass die erste und die zweite Datenerfassungseinheit stets einen identischen Datensatz aufweisen und somit synchronisiert sind. Indem die erste Datenerfassungseinheit aktiv und unmittelbar in einen Sendemodus über Funk umschaltet, wenn ein Lösen der zweiten Datenerfassungseinheit von dem Fahrzeug erkannt wurde, kann diese Synchronisation fortgesetzt werden, bis die erste Datenerfassungseinheit keine Fahrzeugdaten mehr an die zweite Datenerfassungseinheit sendet oder hierzu nicht mehr in der Lage ist, beispielsweise wenn die erste Datenerfassungseinheit durch den Verlust des Fahrzeugs zerstört wurde. Mit anderen Worten können sämtliche Daten von der zweiten Datenerfassungseinheit aufgezeichnet werden, bis die erste Datenerfassungseinheit zerstört ist, unabhängig davon wie weit die zweite Datenerfassungseinheit zwischenzeitlich von der ersten Datenerfassungseinheit getrennt wurde.

Das bedeutet, dass die zweite Datenerfassungseinheit bereits von dem Fahrzeug gelöst bzw. abgeworfen werden kann, lange bevor überhaupt ein Verlust oder ein Absturz des Fahrzeugs eintritt. Zwischen dem Zeitpunkt des Lösens der zweiten Datenerfassungseinheit von dem Fahrzeug und dem Zeitpunkt des Verlustes des Fahrzeugs können somit mehrere Sekunden, beispielsweise mehr als 10 Sekunden, mehr als 30 Sekunden oder gar mehr als 60 Sekunden liegen. In einem Beispiel beträgt dieser Zeitraum bis zu 15 Minuten. Der Zeitpunkt des Lösens der zweiten Datenerfassungseinheit von dem Fahrzeug hängt nämlich von einer Prognose eines Fahrzeugzustands des Fahrzeugs ab, insbesondere einer Prognose, dass ein Verlust des Fahrzeugs nicht mehr vermeidbar ist. Der Zeitpunkt, bei dem eine solche Prognose erfolgt und damit das Lösen der zweiten Datenerfassungseinheit vom Fahrzeug ausgelöst wird, kann mehrere Sekunden oder sogar Minuten, beispielsweise 15 Minuten, vor dem Verlustzeitpunkt des Fahrzeugs liegen. In diesem Zeitraum zwischen dem Lösen der zweiten Datenerfassungseinheit von dem Fahrzeug und dem Verlust des Fahrzeugs kann durch die Funkverbindung als Datenverbindung eine Kommunikation zwischen der ersten Datenerfassungseinheit und der zweiten Datenerfassungseinheit über mehrere Meter, insbesondere jedoch über mehrere Kilometer aufrechterhalten werden, was sicherstellt, dass sämtliche noch bis zum Verlust des Fahrzeugs von der ersten Datenerfassungseinheit erfassten Fahrzeugdaten auch tatsächlich an die bereits abgeworfene zweite Datenerfassungseinheit weiter übertragen werden können, selbst wenn die zweite Datenerfassungseinheit bereits über mehrere Meter oder Kilometer von dem Fahrzeug und damit von der ersten Datenerfassungseinheit entfernt ist.

Im Zeitpunkt des Verlustes sendet die erste Datenerfassungseinheit das Abbruchsignal an die zweite Datenerfassungseinheit, wobei das Abbruchsignal angeben kann, dass es sich hierbei um das letzte von der ersten Datenerfassungseinheit ausgesendete Signal handelt. Dies kann zum Beispiel in Form eines Pings erfolgen. Das Abbruchsignal bzw. der Ping wird von der ersten Datenerfassungseinhei ausgesendet, wenn eine Aufzeichnung von Fahrzeugdaten oder eine Aufzeichnung von Stimmen oder Geräuschen an Bord des Fahrzeugs durch die erste Datenerfassungseinheit gestoppt wird oder solche Daten nicht mehr von der ersten Datenerfassungseinheit erfasst werden.

Gemäß einer Ausführungsform der Erfindung definiert das Abbruchsignal einen Endzeitpunkt des Übertragens der Fahrzeugdaten von der ersten Datenerfassungseinheit zur zweiten Datenerfassungseinheit über die Datenverbindung.

Erfindungsgemäß wird in dem Zeitpunkt, in dem die erste Datenerfassungseinheit keine Informationen über Stimmen oder Geräusche an Bord des Fahrzeugs oder Fahrzeugdaten mehr aufzeichnen kann, zum Beispiel aufgrund des Verlustes des Fahrzeugs, das Abbruchsignal ausgesendet. Erfindungsgemäß kann damit durch die zweite Datenerfassungseinheit erkannt und verifiziert werden, dass der Datensatz der zweiten Datenerfassungseinheit vollständig mit dem Datensatz der ersten Datenerfassungseinheit übereinstimmt und alles das, was von der ersten Datenerfassungseinheit bis zum Verlust des Fahrzeugs aufgezeichnet wurde, auch von der zweiten Datenerfassungseinheit erfasst und abgespeichert wurde.

Gemäß einer Ausführungsform der Erfindung ist die zweite Datenerfassungseinheit dazu ausgeführt, sämtliche von der ersten Datenerfassungseinheit empfangenen Fahrzeugdaten bis zum Empfang des Abbruchsignals zu speichern.

Sowohl die erste Datenerfassungseinheit als auch die zweite Datenerfassungseinheit können jeweils eine Kommunikationseinheit aufweisen, die es erlaubt, die Datenverbindung zwischen der ersten und zweiten Datenerfassungseinheit herzustellen. Ferner können beide Datenerfassungseinheiten eine Speichereinheit aufweisen, die es erlaubt, die erfassten Daten, also die Stimmdaten, die Geräuschdaten oder die Fahrzeugdaten zu speichern bzw. aufzuzeichnen. Dabei kann die erste Datenerfassungseinheit diese Daten direkt abspeichern und auch an die zweite Datenerfassungseinheit senden, wobei die zweite Datenerfassungseinheit dann ihrerseits diese von der ersten Datenerfassungseinheit empfangenen Daten abspeichert.

Gemäß einer Ausführungsform der Erfindung ist die erste Datenerfassungseinheit und/oder die zweite Datenerfassungseinheit dazu ausgeführt, die Funkverbindung zwischen der ersten Datenerfassungseinheit und der zweiten Datenerfassungseinheit aktiv herzustellen, wenn ein Lösen der zweiten Datenerfassungseinheit von dem Fahrzeug erkannt wird.

Wenn beispielsweise im befestigten Zustand der zweiten Datenerfassungseinheit lediglich eine drahtgebundene Datenverbindung zwischen der ersten Datenerfassungseinheit und der zweiten Datenerfassungseinheit vorhanden ist, ist es erforderlich, dann beim Lösen und damit beim Abriss der drahtgebundenen Datenverbindung aktiv eine neue Datenverbindung in Form einer drahtlosen Datenverbindung, wie der Funkverbindung, herzustellen, um die weitere Datenübertragung auch nach dem Lösen der zweiten Datenerfassungseinheit vom Fahrzeug sicherzustellen.

Auch für den Fall, dass im befestigten Zustand der zweiten Datenerfassungseinheit eine drahtlose Datenverbindung zwischen der ersten Datenerfassungseinheit und der zweiten Datenerfassungseinheit vorhanden ist, kann ebenfalls vorgesehen sein, dass beim Lösen aktiv eine neue Datenverbindung in Form einer anderen drahtlosen Datenverbindung, wie der Funkverbindung, hergestellt wird. Wenn beispielsweise im befestigten Zustand der zweiten Datenerfassungseinheit eine drahtlose Datenverbindung lediglich für den Nahbereich, wie Bluetooth oder WLAN (Wireless Local Area Network) vorliegt, dann kann ebenfalls eine Funkverbindung zwischen der ersten Datenerfassungseinheit und der zweiten Datenerfassungseinheit aktiv hergestellt werden, die ausgeführt ist, auch große Reichweiten von einem oder mehreren Kilometern abzudecken. Dazu können verschiedene Frequenzbänder verwendet werden, wie dies im weiteren Verlauf noch genauer erläutert wird.

Gemäß einer Ausführungsform der Erfindung befinden sich die erste Datenerfassungseinheit und die zweite Datenerfassungseinheit während des befestigten Zustandes in einem Synchronisationsmodus, in dem die Fahrzeugdaten der ersten Datenerfassungseinheit und der zweiten Datenerfassungseinheit kontinuierlich synchronisiert sind, so dass die erste Datenerfassungseinheit und die zweite Datenerfassungseinheit im befestigten Zustand stets einen identischen Satz an Fahrzeugdaten aufweisen.

Dabei wird ein Datensatz, der von der ersten Datenerfassungseinheit erfasst wird, kontinuierlich an die zweite Datenerfassungseinheit weitergeleitet durch Übertragung über die Datenverbindung, so dass ein Datensatz der ersten Datenerfassungseinheit und der zweiten Datenerfassungseinheit stets identisch, das heißt stets synchronisiert sind. Auf diese Weise wird sichergestellt, dass die von dem Fahrzeug gesammelten Daten zumindest anhand der zweiten Datenerfassungseinheit geborgen werden können, sollte die erste Datenerfassungseinheit nicht mehr geborgen werden können, beispielsweise weil die erste Datenerfassungseinheit zerstört wurde.

Gemäß einer Ausführungsform der Erfindung ist die erste Datenerfassungseinheit dazu ausgeführt ist, beim Lösen der zweiten Datenerfassungseinheit von dem Fahrzeug in einen Sendemodus zu wechseln, in dem die erste Datenerfassungseinheit die Fahrzeugdaten mittels der Funkverbindung an die zweite Datenerfassungseinheit sendet, um somit sämtliche von der ersten Datenerfassungseinheit erfassten Fahrzeugdaten an die zweite Datenerfassungseinheit zu übertragen.

Der aktive Wechsel bzw. das Umschalten in einen drahtlosen Sendemodus kann vorgesehen sein, damit eine Datenverbindung, welche im gelösten Zustand der zweiten Datenerfassungseinheit aufrechterhalten wird, eine Frequenz aufweist, die es ermöglicht, die Datenverbindung auch über einen oder mehrere Kilometer aufrechtzuerhalten. Der Sendemodus kann das Aussenden der Daten über die Funkverbindung an die zweite Datenerfassungseinheit in diskreten Zeitintervallen umfassen, beispielsweise jedes Mal, wenn die erste Datenerfassungseinheit Daten erfasst. Das Aussenden kann auch das Aussenden der Daten über die Funkverbindung an die zweite Datenerfassungseinheit gemäß fest vordefinierten Zeitintervallen umfassen.

Gemäß einer Ausführungsform der Erfindung weist die Datenverbindung zum Übertragen der Fahrzeugdaten zwischen der ersten Datenerfassungseinheit und der zweiten Datenerfassungseinheit in dem gelösten Zustand der zweiten Datenerfassungseinheit eine Reichweite von mindestens 10 Metern, mindestens 100 Metern, mindestens 1000 Metern oder mindestens 5000 Metern auf. In einem Beispiel beträgt die Reichweite bis zu 250 Kilometer.

Diese Reichweiten können dabei die Entfernung zwischen der zweiten Datenerfassungseinheit und der ersten Datenerfassungseinheit und damit die Entfernung zwischen der zweiten Datenerfassungseinheit und dem Fahrzeug angeben. Es ist möglich, dass die Reichweite der zwischen beiden Datenerfassungseinheiten ausgebildeten Datenverbindung, das heißt Funkverbindung, im gelösten Zustand der zweiten Datenerfassungseinheit größer als 10 Kilometer oder aber auch größer als 100 Kilometer, beispielsweise sogar 250 Kilometer, ist. Hierfür werden für die Funkverbindung jeweils geeignete Frequenzbänder ausgewählt, die eine Datenübertragung über solche Entfernungen erlauben.

Gemäß einer Ausführungsform der Erfindung wird die Datenverbindung zum Übertragen der Fahrzeugdaten zwischen der ersten Datenerfassungseinheit und der zweiten Datenerfassungseinheit in dem gelösten Zustand mittels der Funkverbindung basierend auf einem Ka-Band, einem Ku-Band oder einem L-Band bereitgestellt wird.

Eine Datenverbindung bzw. Funkverbindung auf Basis eines Ku-Bandes kann eine Frequenz von 12 bis 18 GHz abdecken. Eine Datenverbindung bzw. Funkverbindung auf Basis eines Ka-Bandes kann eine Frequenz von 26,5 bis 40 GHz abdecken. Eine Datenverbindung bzw. Funkverbindung auf Basis eines L-Bandes kann eine Frequenz von 1 bis 2 GHz abdecken. Diese Frequenzbänder sind geeignet, um die Datenverbindung zwischen der ersten und zweiten Datenerfassungseinheit über mehrere Kilometer sicherzustellen. Somit kann die erste Datenerfassungseinheit Daten über mehrere Kilometer an die zweite Datenerfassungseinheit senden. Hierbei können leistungsstarke Antennen verwendet werden, mit denen Reichweiten von ca. 250 Kilometer für die Datenverbindung bereitgestellt werden können.

Die Auswahl, welches Frequenzband bereitgestellt wird, kann dabei ebenfalls von der Prognose des Flugzeugzustands des Fahrzeugs abhängen. Dabei kann vorgesehen sein, dass die Prognose auf eine Zeitspanne bis zum unvermeidbaren Verlust des Fahrzeugs bezogen ist und auf Basis dieser Zeitspanne dann das geeignete Frequenzband ausgewählt wird. Je größer beispielsweise die Zeitspanne bis zum vorhergesagten Verlust des Fahrzeugs, desto größer wird die Entfernung sein, die das Fahrzeug nach Lösen der zweiten Datenerfassungseinheit noch zurücklegt und desto größer sollte somit die durch das Frequenzband bereitstellbare Reichweite für die Datenverbindung zwischen der ersten und zweiten Datenerfassungseinheit sein.

Gemäß einer Ausführungsform der Erfindung ist der Lösemechanismus ferner dazu ausgeführt, die Befestigung der zweiten Datenerfassungseinheit an dem Fahrzeug basierend auf einer Position und/oder Ausrichtung des Fahrzeugs relativ zu einem Aufprallobjekt zu lösen.

Das Aufprallobjekt kann beispielsweise ein Gegenstand in der Umgebung des Fahrzeugs sein, auf welches das Fahrzeug zusteuert, ohne dass es noch möglich ist, diesem Aufprallobjekt auszuweichen. Für den Fall, dass das Fahrzeug ein Luftfahrzeug ist, kann das Aufprallobjekt beispielsweise eine Erdoberfläche oder eine Wasseroberfläche sein.

Die Prognose für den Fahrzeugzustand kann Aufschluss darüber geben, ob ein Aufprall auf das Aufprallobjekt unmittelbar bevorsteht bzw. ein Ausweichmanöver nicht mehr möglich ist. Diese Prognose kann basierend auf aktuellen Positionsdaten des Fahrzeugs und aktuellen Positionsdaten des Aufprallobjekts erfolgen. Ebenso kann die Ausrichtung und damit die aktuelle Bewegungsrichtung des Fahrzeugs Einfluss auf die Prognose haben. Für den Fall, dass es sich um ein Luftfahrzeug handelt und dieses Luftfahrzeug auf eine Wasseroberfläche als Aufprallobjekt zusteuert, kann durch Berechnung der Position des Luftfahrzeugs relativ zur Wasseroberfläche sowie einer Bewegungsgeschwindigkeit des Luftfahrzeugs berechnet werden, ob ein Ausweichmanöver noch möglich ist oder nicht. Ist diese Berechnung negativ, wird der Lösemechanismus aktiviert und die zweite Datenerfassungseinheit wird vom Luftfahrzeug gelöst bzw. abgeworfen.

Gemäß einer Ausführungsform der Erfindung ist der Lösemechanismus ferner dazu ausgeführt, die Befestigung der zweiten Datenerfassungseinheit an dem Fahrzeug basierend auf einer berechneten Fahrzeugbahnkurve des Fahrzeugs zu lösen.

Eine Berechnung der zukünftigen Fahrzeugbahnkurve oder Fahrzeugtrajektorie, insbesondere unter Berücksichtigung von Fahrzeugleistungsparametern, kann eine Prognose für den künftigen Fahrzeugzustand bereitstellen, indem beispielsweise berechnet wird, ob das Fahrzeug aufgrund seiner Leistungsparameter oder Belastungsparameter noch ein Ausweichmanöver vollziehen kann oder nicht. Bei negativem Ergebnis, das heißt wenn das Ausweichmanöver nicht mehr möglich ist, wird wiederum der Lösemechanismus aktiviert und die zweite Datenerfassungseinheit wird vom Fahrzeug gelöst bzw. abgeworfen.

Zum Beispiel kann ein Prozessor des Fahrzeugs eine Echtzeitanalyse von aktuellen Fahrzeugzuständen einschließlich geografischer Parameter durchführen, um eine Prognose für die Vermeidbarkeit oder Unvermeidbarkeit eines Verlustes des Fahrzeugs zu erstellen. Hierzu kann auch eine Wahrscheinlichkeitsberechnung über die Vermeidbarkeit oder Unvermeidbarkeit eines Verlustes des Fahrzeugs herangezogen werden.

Gemäß einer Ausführungsform der Erfindung ist die Funkverbindung eine Breitbandfunkverbindung.

Eine solche Breitbandfunkverbindung kann beispielsweise unter Verwendung einer sog. High Bandwidth Connectivity (HBC) bereitgestellt werden. Frequenzen, die von der HBC verwendet werden, sind zum Beispiel das Ka-Band, das Ku-Band oder das L-Band, wie sie zuvor bereits beschrieben wurden. Eine solche leistungsstarke Datenverbindung, welche durch HBC-Antennen bereitgestellt werden kann, ermöglicht es, mit Satelliten zu kommunizieren, so dass diese Datenverbindung auch für große Entfernungen, insbesondere Reichweiten von über einem Kilometer zwischen der ersten und zweiten Datenerfassungseinheit nach Lösen der zweiten Datenerfassungseinheit, aufrechterhalten werden kann. Die HBC-Verbindung gewährleistet somit eine weitere Synchronisation der Daten der ersten und zweiten Datenerfassungseinheit.

Gemäß einer Ausführungsform der Erfindung weist die zweite Datenerfassungseinheit eine Abfangvorrichtung auf, die dazu ausgeführt ist, im Falle eines Aufpralls der zweiten Datenerfassungseinheit auf ein Aufprallobjekt eine Dämpfung zu bewirken.

Die Abfangvorrichtung kann in die zweite Datenerfassungseinheit integriert sein. Die Abfangvorrichtung kann in Form eines Luftkissens, insbesondere in Form eines Airbags ausgeführt sein. Dabei kann der Airbag kurz vor einem Aufprall der zweiten Datenerfassungseinheit auf dem Aufprallobjekt ausgelöst bzw. aufgeblasen werden, um somit den Aufprall abzufedern.

Gemäß einer Ausführungsform der Erfindung ist das Fahrzeug ein Luftfahrzeug und/oder die Fahrzeugdaten umfassen Luftfahrzeugdaten.

Die Luftfahrzeugdaten können beispielsweise Sensordaten des Luftfahrzeugs sein. Zum Beispiel können die Luftfahrzeugdaten Positionsdaten, Geschwindigkeitsdaten, Beschleunigungsdaten, Kabineninformationen usw. umfassen.

Die Luftfahrzeugdaten können insbesondere Cockpit Daten wie allgemeine Cockpit-Daten, Cockpit-Stimmendaten, Cockpit-Bilddaten, Cockpit-Videodaten, Cockpit-Audiodaten usw. umfassen. Ferner können Daten des Lösemechanismus der zweiten Datenerfassungseinheit umfasst sein, die angeben, welche Umstände das Lösen bzw. den Abwurf der zweiten Datenerfassungseinheit ausgelöst haben.

Die Luftfahrzeugdaten können ferner Daten bezüglich einer Lokalisierung, eines Kurses, einer Flughöhe und/oder einer Geschwindigkeit des Luftfahrzeugs gegenüber dem Grund oder der Umgebung aufweisen. Ferner können diese Daten GPS-Koordinaten, Daten bezüglich Roll-/ Nick-/ Gierwinkel umfassen. Ebenso können diese Daten Wetterdaten, Innentemperatur, Außentemperatur, Innenluftdruck, Außenluftdruck, Innenluftfeuchtigkeit und/oder Außenluftfeuchtigkeit umfassen. Luftfahrzeugdaten können FMS (Flight Management System) -Daten wie Programmierungsdaten des Autopiloten, Daten bezüglich der Position von Slats oder Flaps des Luftfahrzeugs, Daten bezüglich der Trimmung, der Beladung und/oder des Gewichts sein. Ferner können Luftfahrzeugdaten Triebwerksdaten wie Temperatur, Drehzahl und Leistung, sowie Hydraulikdaten, Elektrikdaten und/oder Pneumatikdaten umfassen.

Sämtliche der genannten Luftfahrzeugdaten können von der ersten Datenerfassungseinheit erfasst werden und sämtliche der genannten Luftfahrzeugdaten können auch von der ersten Datenerfassungseinheit an die zweite Datenerfassungseinheit übertragen werden, um diese Daten zu sichern.

Gemäß einem Aspekt der Erfindung ist ein Verfahren zum Erfassen von Fahrzeugdaten eines Fahrzeugs angegeben. In einem Schritt des Verfahrens erfolgt ein Bereitstellen einer ersten Datenerfassungseinheit und einer zweiten Datenerfassungseinheit. In einem weiteren Schritt erfolgt ein Verbinden der ersten Datenerfassungseinheit und der zweiten Datenerfassungseinheit über eine Datenverbindung, um somit Fahrzeugdaten von der ersten Datenerfassungseinheit an die zweite Datenerfassungseinheit zu übertragen. In einem weiteren Schritt erfolgt ein Befestigen der zweiten Datenerfassungseinheit an dem Fahrzeug in einem befestigten Zustand. In einem weiteren Schritt erfolgt ein Lösen der Befestigung der zweiten Datenerfassungseinheit an dem Fahrzeug, um die zweite Datenerfassungseinheit somit in einen gelösten Zustand zu verbringen. In einem weiteren Schritt erfolgt ein Lösen der Befestigung der zweiten Datenerfassungseinheit an dem Fahrzeug basierend auf einer Prognose für einen Fahrzeugzustand des Fahrzeugs. In einem weiteren Schritt erfolgt ein räumliches Trennen der zweiten Datenerfassungseinheit von der ersten Datenerfassungseinheit. In einem weiteren Schritt erfolgt ein Aufrechterhalten der Datenverbindung zum Übertragen der Fahrzeugdaten zwischen der ersten Datenerfassungseinheit und der zweiten Datenerfassungseinheit in dem gelösten Zustand mittels einer Funkverbindung, bis zum Empfang eines Abbruchsignals durch die zweite Datenerfassungseinheit von der ersten Datenerfassungseinheit.

### Kurze Beschreibung der Figuren

- Fig. 1: zeigt ein Luftfahrzeug mit einem Datenerfassungssystem zum Erfassen von Luftfahrzeugdaten eines Luftfahrzeugs gemäß einem Ausführungsbeispiel der Erfindung.
- Fig. 2: zeigt ein Flussdiagramm für ein Verfahren zum Erfassen von Fahrzeugdaten eines Fahrzeugs gemäß einem Ausführungsbeispiel der Erfindung.

### Detaillierte Beschreibung beispielhafter Ausführungsformen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

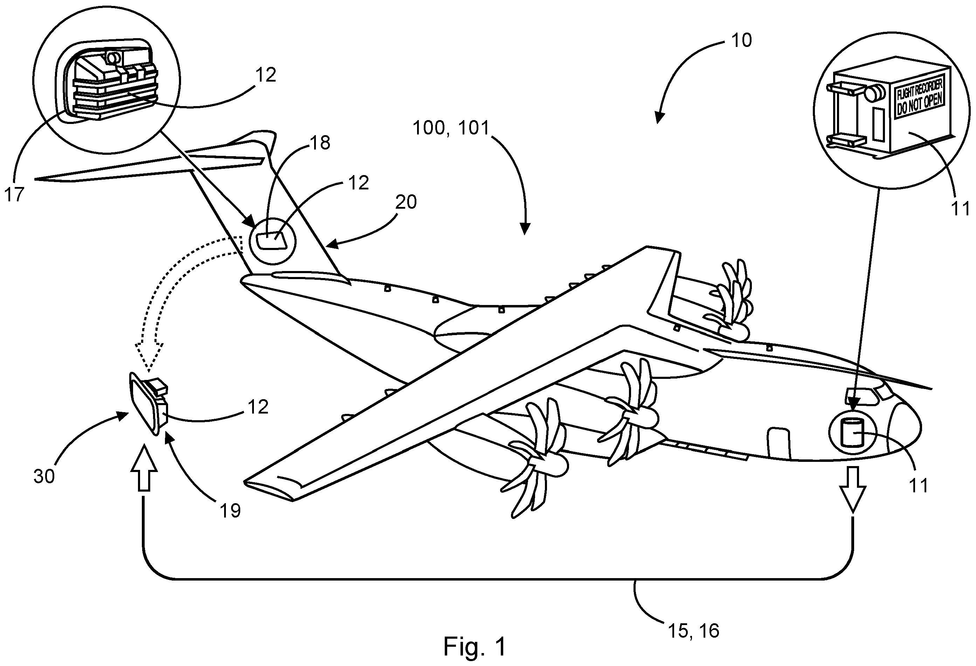

Fig. 1 zeigt ein Luftfahrzeug 101 mit einem Datenerfassungssystem 10 zum Erfassen von Luftfahrzeugdaten des Luftfahrzeugs 101. Das Datenerfassungssystem 10 weist eine erste Datenerfassungseinheit 11 auf, welche auch als CVDR oder "Black-Box" bezeichnet wird, und eine zweite Datenerfassungseinheit 12, welche über eine Datenverbindung 15 mit der ersten Datenerfassungseinheit 11 verbunden ist. Die Datenverbindung 15 ist hier schematisch dargestellt. Es sei angemerkt, dass diese Datenverbindung 15 eine drahtgebundene Verbindung zwischen beiden Datenerfassungseinheiten 11, 12 sein kann, die durch das Luftfahrzeug 101 verläuft und damit in einem befestigten Zustand 20, in dem die zweite Datenerfassungseinheit 12 an dem Luftfahrzeug 101 befestigt ist, die Datenverbindung 15 zwischen beiden Datenerfassungseinheiten 11, 12 bilden kann.

Über die Datenverbindung 15 werden die Luftfahrzeugdaten von der ersten Datenerfassungseinheit 11 an die zweite Datenerfassungseinheit 12 übertragen. Dabei werden zunächst von der ersten Datenerfassungseinheit 11 Luftfahrzeugdaten aufgenommen, welche beispielsweise Audiodaten, visuelle Daten, Flugdaten oder sonstige Sensordaten des Luftfahrzeugs 101 umfassen. In einem Beispiel umfasst die erste Datenerfassungseinheit 11 einen Stimmenrekorder bzw. einen Geräuschrekorder zur Aufzeichnung von Stimmen bzw. Geräuschen an Bord des Luftfahrzeugs 101. Die Luftfahrzeugdaten werden während des gesamten Betriebs des Luftfahrzeugs 101 kontinuierlich erfasst und aufgenommen bzw. in der ersten Datenerfassungseinheit 11 aufgezeichnet, das heißt gespeichert. Unmittelbar nach oder gleichzeitig zum Aufzeichnen und Speichern dieser Luftfahrzeugdaten in der ersten Datenerfassungseinheit 11 erfolgt eine Übertragung dieser Luftfahrzeugdaten an die zweite Datenerfassungseinheit 12, welche diese Luftfahrzeugdaten wiederum selbst abspeichert. Mit anderen Worten werden sämtliche Luftfahrzeugdaten während des Betriebs des Luftfahrzeugs 101 doppelt abgespeichert. Fig. 1 zeigt sowohl die erste Datenerfassungseinheit 11 als auch die zweite Datenerfassungseinheit 12 in einer zusätzlichen vergrößerten Darstellung.

Das Datenerfassungssystem 10, insbesondere die zweite Datenerfassungseinheit 12 weist ferner einen Befestigungsmechanismus 17 auf, der dazu ausgeführt ist, die zweite Datenerfassungseinheit 12 in dem befestigten Zustand 20 an dem Luftfahrzeug 101 zu befestigen. Das Datenerfassungssystem 10 weist ferner einen Lösemechanismus 18 auf, der dazu ausgeführt ist, die Befestigung der zweiten Datenerfassungseinheit 12 an dem Luftfahrzeug 101 zu lösen und die zweite Datenerfassungseinheit 12 somit in einen gelösten Zustand 30 zu verbringen, in dem die zweite Datenerfassungseinheit 12 von dem Luftfahrzeug 101 räumlich getrennt ist. In Fig. 1 sind sowohl der befestigte Zustand 20 als auch der gelöste Zustand 30 gezeigt.

Durch den Lösemechanismus 18 wird ferner die Befestigung der zweiten Datenerfassungseinheit 12 an dem Luftfahrzeug 101 basierend auf einer Prognose für einen Luftfahrzeugzustand des Luftfahrzeugs 101 gelöst, das heißt von dem befestigten Zustand 20 in den gelösten Zustand 30 verbracht. Wie in Fig. 1 dargestellt, kann die zweite Datenerfassungseinheit 12 dazu quasi vom Luftfahrzeug 101 abgeworfen oder abgesprengt werden.

Die zweite Datenerfassungseinheit 12 hält die Datenverbindung 15 zum Übertragen der Fahrzeugdaten zwischen der ersten Datenerfassungseinheit 11 und der zweiten Datenerfassungseinheit 12 während des gesamten Betriebs und damit auch bis zu einem möglichen Verlust des Luftfahrzeugs 101 aufrecht. Der Verlust des Luftfahrzeugs 101 kann beispielsweise durch einen Aufprall des Luftfahrzeugs 101 auf ein Aufprallobjekt, wie einer Erdoberfläche oder einer Wasseroberfläche, erfolgen, wobei eine Zerstörung des Luftfahrzeugs 101 und damit auch der ersten Datenerfassungseinheit 11 nicht ausgeschlossen werden kann. Jedenfalls kann die Datenverbindung 15 mittels einer geeigneten Funkverbindung 16 auch dann noch aufrechterhalten werden, wenn die zweite Datenerfassungseinheit 12 bereits von dem Luftfahrzeug 101 gelöst bzw. abgeworfen wurde, beispielsweise da eine Prognose für einen bevorstehenden und unvermeidlichen Verlust des Luftfahrzeugs 101 bestimmt wurde. Die Prognose hierfür kann durch eine in Fig. 1 nicht dargestellte Steuereinheit des Luftfahrzeugs 101, beispielsweise einem Prozessor, bestimmt werden.

In dem gelösten Zustand 30 kann also mittels der Funkverbindung 16 die Datenverbindung 15 über einen Zeitraum zwischen dem Lösen der zweiten Datenerfassungseinheit 12 vom Luftfahrzug 101 und dem Verlust des Luftfahrzeugs 101 und damit möglicherweise auch der ersten Datenerfassungseinheit 11 aufrechterhalten werden. Der Zeitpunkt des Verlustes der ersten Datenerfassungseinheit 11, welcher den genannten Zeitraum der Funkverbindung beendet, wird durch ein Abbruchsignal gekennzeichnet, das eigens an die zweite Datenerfassungseinheit 12 als quasi letztes Signal gesendet wird. Dadurch erhält die zweite Datenerfassungseinheit 12 eine Information, die es ermöglicht, zu bestimmen, dass sämtliche von der ersten Datenerfassungseinheit 11 erfassten und abgespeicherten Daten auch durch die zweite Datenerfassungseinheit 12 erfasst und reproduzierbar abgespeichert sind. Die Übertragung der Daten über die Funkverbindung wird daher über den gesamten Zeitraum zwischen Lösen der zweiten Datenerfassungseinheit 12 von dem Luftfahrzeug 101 und Abbruchsignal sichergestellt. Dadurch wird erreicht, dass im Falle eines Verlustes der Daten auf der ersten Datenerfassungseinheit 11 dennoch sämtliche durch diese erfassten Daten auch in der zweiten Datenerfassungseinheit 12 zur Verfügung stehen, da die zweite Datenerfassungseinheit 12 rechtzeitig von der ersten Datenerfassungseinheit 11 bzw. dem Luftfahrzeug 101 räumlich getrennt wurde und die zweite Datenerfassungseinheit 12 im Gegensatz zur ersten Datenerfassungseinheit 11 nicht zerstört wird. Der Verlust der Daten der ersten Datenerfassungseinheit 11 kann beispielsweise dadurch auftreten, dass die erste Datenerfassungseinheit 11 durch mechanische Verformung zerstört wird oder aber nicht mehr geborgen werden kann.

In einem Beispiel wird durch einen Bordprozessor des Luftfahrzeugs 101 ein Aufprallobjekt ermittelt, auf welches das Luftfahrzeug 101 zusteuert. Mittels einer Echtzeitanalyse der Flugparameter einschließlich der Positionsdaten, Richtungsdaten, Geschwindigkeitsdaten und/oder Leistungsparameter des Luftfahrzeugs 101 kann der Bordprozessor bestimmen, ob ein Ausweichmanöver zur Vermeidung des Aufpralls auf das Aufprallobjekt eingeleitet werden kann bzw. noch möglich ist. Reichen die Leistungsparameter, wie maximaler Schub oder allgemeine Wendefähigkeit des Luftfahrzeugs 101 nicht mehr aus, um den Aufprall und damit den Verlust des Luftfahrzeugs 101 noch zu vermeiden, dann wird sofort die zweite Datenerfassungseinheit 12 vom Luftfahrzeug 101 gelöst und räumlich von diesem getrennt.

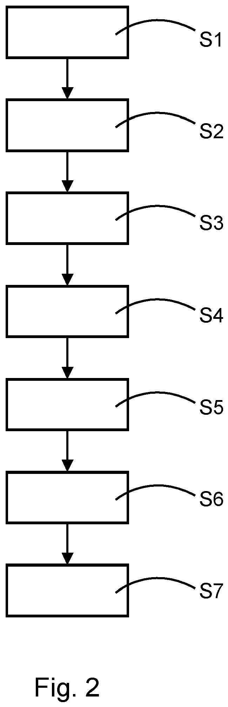

Fig. 2 zeigt ein Flussdiagram für ein Verfahren zum Erfassen von Fahrzeugdaten eines Fahrzeugs 100. In einem Schritt S1 des Verfahrens wird eine erste Datenerfassungseinheit 11 und eine zweite Datenerfassungseinheit 12 bereitgestellt. In einem weiteren Schritt S2 wird die erste Datenerfassungseinheit 11 mit der zweiten Datenerfassungseinheit 12 über eine Datenverbindung 15 verbunden, um somit Fahrzeugdaten von der ersten Datenerfassungseinheit 11 an die zweite Datenerfassungseinheit 12 zu übertragen. In einem weiteren Schritt S3 erfolgt ein Befestigen der zweiten Datenerfassungseinheit 12 an dem Fahrzeug 100 in einem befestigten Zustand 20. In einem weiteren Schritt S4 wird die Befestigung der zweiten Datenerfassungseinheit 12 an dem Fahrzeug 100 gelöst, um die zweite Datenerfassungseinheit 12 somit in einen gelösten Zustand 30 zu verbringen. In einem weiteren Schritt S5 wird die Befestigung der zweiten Datenerfassungseinheit 12 an dem Fahrzeug 100 basierend auf einer Prognose für einen Fahrzeugzustand des Fahrzeugs 100 gelöst. In einem weiteren Schritt S6 wird die zweite Datenerfassungseinheit 12 von der ersten Datenerfassungseinheit 11 räumlich getrennt. In einem weiteren Schritt S7 wird die Datenverbindung 15 zum Übertragen der Fahrzeugdaten zwischen der ersten Datenerfassungseinheit 11 und der zweiten Datenerfassungseinheit 12 in dem gelösten Zustand 30 mittels einer Funkverbindung 16 aufrechterhalten, bis zum Empfang eines Abbruchsignals durch die zweite Datenerfassungseinheit 12 von der ersten Datenerfassungseinheit 11.

## Patentansprüche

1. Datenerfassungssystem (10) zum Erfassen von Fahrzeugdaten eines Fahrzeugs (100), aufweisend:
eine erste Datenerfassungseinheit (11);
eine zweite Datenerfassungseinheit (12), welche über eine Datenverbindung (15) mit der ersten Datenerfassungseinheit (11) verbunden ist, um somit Fahrzeugdaten von der ersten Datenerfassungseinheit (11) an die zweite Datenerfassungseinheit (12) zu übertragen;
einen Befestigungsmechanismus (17), der dazu ausgeführt ist, die zweite Datenerfassungseinheit (12) in einem befestigten Zustand (20) an dem Fahrzeug (100) zu befestigen;
einen Lösemechanismus (18), der dazu ausgeführt ist, die Befestigung der zweiten Datenerfassungseinheit (12) an dem Fahrzeug (100) zu lösen und die zweite Datenerfassungseinheit (12) somit in einen gelösten Zustand (30) zu verbringen, in dem die zweite Datenerfassungseinheit (12) von dem Fahrzeug (100) räumlich getrennt ist;
wobei der Lösemechanismus (18) ferner dazu ausgeführt ist, die Befestigung der zweiten Datenerfassungseinheit (12) an dem Fahrzeug (100) basierend auf einer Prognose für einen Fahrzeugzustand des Fahrzeugs (100) zu lösen;
wobei die zweite Datenerfassungseinheit (12) dazu ausgeführt ist, die Datenverbindung (15) zum Übertragen der Fahrzeugdaten zwischen der ersten Datenerfassungseinheit (11) und der zweiten Datenerfassungseinheit (12) in dem gelösten Zustand (30) mittels einer Funkverbindung (16) aufrechtzuerhalten,
**dadurch gekennzeichnet, dass**
die zweite Datenerfassungseinheit (12) dazu ausgeführt ist, die Datenverbindung (15) mindestens so lange aufrechtzuerhalten, bis die zweite Datenerfassungseinheit (12) ein Abbruchsignal von der ersten Datenerfassungseinheit (11) empfängt, das in dem Zeitpunkt ausgesendet wurde, in dem die erste Datenerfassungseinheit (11) keine Informationen über Stimmen oder Geräusche an Bord des Fahrzeugs oder Fahrzeugdaten mehr aufzeichnen kann;
wobei die erste Datenerfassungseinheit (11) so ausgeführt ist, dass sie das Abbruchsignal sendet, wenn die erste Datenerfassungseinheit (11) keine Informationen über Stimmen oder Geräusche an Bord des Fahrzeugs (100) oder Fahrzeugdaten mehr aufzeichnen kann; und
wobei anhand des Abbruchsignals erkannt und verifiziert werden kann, dass ein Datensatz der zweiten Datenerfassungseinheit (12) vollständig mit einem Datensatz der ersten Datenerfassungseinheit (11) übereinstimmt und dass sämtliche Daten, die von der ersten Datenerfassungseinheit (11) aufgezeichnet wurden, auch von der zweiten Datenerfassungseinheit (12) erfasst und abgespeichert sind.

2. Datenerfassungssystem (10) nach Anspruch 1,
wobei das Abbruchsignal einen Endzeitpunkt des Übertragens der Fahrzeugdaten von der ersten Datenerfassungseinheit (11) zur zweiten Datenerfassungseinheit (12) über die Datenverbindung (15) definiert.

3. Datenerfassungssystem (10) nach einem der vorhergehenden Ansprüche,
wobei die zweite Datenerfassungseinheit (12) dazu ausgeführt ist, sämtliche von der ersten Datenerfassungseinheit (11) empfangenen Fahrzeugdaten bis zum Empfang des Abbruchsignals zu speichern.

4. Datenerfassungssystem (10) nach einem der vorhergehenden Ansprüche,
wobei die erste Datenerfassungseinheit (11) und/oder die zweite Datenerfassungseinheit (12) dazu ausgeführt ist, die Funkverbindung (16) zwischen der ersten Datenerfassungseinheit (11) und der zweiten Datenerfassungseinheit (12) aktiv herzustellen, wenn ein Lösen der zweiten Datenerfassungseinheit (12) von dem Fahrzeug (100) erkannt wird.

5. Datenerfassungssystem (10) nach einem der vorhergehenden Ansprüche,
wobei sich die erste Datenerfassungseinheit (11) und die zweite Datenerfassungseinheit (12) während des befestigten Zustandes (20) in einem Synchronisationsmodus befinden, in dem die Fahrzeugdaten der ersten Datenerfassungseinheit (11) und der zweiten Datenerfassungseinheit (12) kontinuierlich synchronisiert sind, so dass die erste Datenerfassungseinheit (11) und die zweite Datenerfassungseinheit (12) im befestigten Zustand (20) stets einen identischen Satz an Fahrzeugdaten aufweisen;
wobei die erste Datenerfassungseinheit (11) dazu ausgeführt ist, beim Lösen der zweiten Datenerfassungseinheit (12) von dem Fahrzeug (100) in einen Sendemodus zu wechseln, in dem die erste Datenerfassungseinheit (11) die Fahrzeugdaten mittels der Funkverbindung (16) an die zweite Datenerfassungseinheit (12) sendet, um somit sämtliche von der ersten Datenerfassungseinheit (11) erfassten Fahrzeugdaten an die zweite Datenerfassungseinheit (12) zu übertragen.

6. Datenerfassungssystem (10) nach einem der vorhergehenden Ansprüche,
wobei die Datenverbindung (15) zum Übertragen der Fahrzeugdaten zwischen der ersten Datenerfassungseinheit (11) und der zweiten Datenerfassungseinheit (12) in dem gelösten Zustand (30) eine Reichweite von mindestens 10 Metern, mindestens 100 Metern, mindestens 1000 Metern oder mindestens 5000 Metern aufweist.

7. Datenerfassungssystem (10) nach einem der vorhergehenden Ansprüche,
wobei die Datenverbindung (15) zum Übertragen der Fahrzeugdaten zwischen der ersten Datenerfassungseinheit (11) und der zweiten Datenerfassungseinheit (12) in dem gelösten Zustand (30) mittels der Funkverbindung (16) basierend auf einem Ka-Band, einem Ku-Band oder einem L-Band bereitgestellt wird.

8. Datenerfassungssystem (10) nach einem der vorhergehenden Ansprüche,
wobei der Lösemechanismus (18) ferner dazu ausgeführt ist, die Befestigung der zweiten Datenerfassungseinheit (12) an dem Fahrzeug (100) basierend auf einer Position und/oder Ausrichtung des Fahrzeugs (100) relativ zu einem Aufprallobjekt zu lösen.

9. Datenerfassungssystem (10) nach einem der vorhergehenden Ansprüche,
wobei der Lösemechanismus (18) ferner dazu ausgeführt ist, die Befestigung der zweiten Datenerfassungseinheit (12) an dem Fahrzeug (100) basierend auf einer berechneten Fahrzeugbahnkurve des Fahrzeugs (100) zu lösen.

10. Datenerfassungssystem (10) nach einem der vorhergehenden Ansprüche,
wobei die Funkverbindung (16) eine Breitbandfunkverbindung ist.

11. Datenerfassungssystem (10) nach einem der vorhergehenden Ansprüche,
wobei die zweite Datenerfassungseinheit (12) eine Abfangvorrichtung (19) aufweist, die dazu ausgeführt ist, im Falle eines Aufpralls der zweiten Datenerfassungseinheit (12) auf ein Aufprallobjekt eine Dämpfung zu bewirken.

12. Datenerfassungssystem (10) nach einem der vorhergehenden Ansprüche,
wobei das Fahrzeug (100) ein Luftfahrzeug (101) ist; und/oder
wobei die Fahrzeugdaten Luftfahrzeugdaten sind.

13. Verfahren zum Erfassen von Fahrzeugdaten eines Fahrzeugs (100), aufweisend die Schritte:
Bereitstellen einer ersten Datenerfassungseinheit (11) und einer zweiten Datenerfassungseinheit (12, S1);
Verbinden der ersten Datenerfassungseinheit (11) und der zweiten Datenerfassungseinheit (12) über eine Datenverbindung (15), um somit Fahrzeugdaten von der ersten Datenerfassungseinheit (11) an die zweite Datenerfassungseinheit (12) zu übertragen (S2);
Befestigen der zweiten Datenerfassungseinheit (12) an dem Fahrzeug (100) in einem befestigten Zustand (20, S3);
Lösen der Befestigung der zweiten Datenerfassungseinheit (12) an dem Fahrzeug (100), um die zweite Datenerfassungseinheit (12) somit in einen gelösten Zustand (30) zu verbringen (S4);
Lösen der Befestigung der zweiten Datenerfassungseinheit (12) an dem Fahrzeug (100) basierend auf einer Prognose für einen Fahrzeugzustand des Fahrzeugs (100, S5);
Räumliches Trennen der zweiten Datenerfassungseinheit (12) von der ersten Datenerfassungseinheit (11, S6); und
Aufrechterhalten der Datenverbindung (15) zum Übertragen der Fahrzeugdaten zwischen der ersten Datenerfassungseinheit (11) und der zweiten Datenerfassungseinheit (12) in dem gelösten Zustand (30) mittels einer Funkverbindung (16),
**dadurch gekennzeichnet, dass**
die Datenverbindung (15) bis zum Empfang eines Abbruchsignals durch die zweite Datenerfassungseinheit (12) von der ersten Datenerfassungseinheit (11, S7) aufrechterhalten wird, das in dem Zeitpunkt ausgesendet wird, in dem die erste Datenerfassungseinheit (11) keine Informationen über Stimmen oder Geräusche an Bord des Fahrzeugs oder Fahrzeugdaten mehr aufzeichnen kann;
wobei anhand des Abbruchsignals erkannt und verifiziert werden kann, dass ein Datensatz der zweiten Datenerfassungseinheit (12) vollständig mit einem Datensatz der ersten Datenerfassungseinheit (11) übereinstimmt und dass sämtliche Daten, die von der ersten Datenerfassungseinheit (11) aufgezeichnet wurden, auch von der zweiten Datenerfassungseinheit (12) erfasst und abgespeichert sind.

## Claims

1. Data acquisition system (10) for acquiring vehicle data of a vehicle (100), comprising:
a first data acquisition unit (11);
a second data acquisition unit (12) connected via a data link (15) to the first data acquisition unit (11) in order to thus transmit vehicle data from the first data acquisition unit (11) to the second data acquisition unit (12);
an attachment mechanism (17) designed to attach the second data acquisition unit (12) to the vehicle (100) in an attached state (20);
a release mechanism (18) designed to release the attachment of the second data acquisition unit (12) to the vehicle (100) and thus to move the second data acquisition unit (12) to a released state (30) in which the second data acquisition unit (12) is physically separate from the vehicle (100);
wherein the release mechanism (18) is further designed to release the attachment of the second data acquisition unit (12) to the vehicle (100) based on a forecast for a vehicle state of the vehicle (100);
wherein the second data acquisition unit (12) is designed to maintain the data link (15) for transmitting the vehicle data between the first data acquisition unit (11) and the second data acquisition unit (12) in the released state (30) by means of a radio link (16),
**characterized in that**
the second data acquisition unit (12) is designed to maintain the data link (15) for at least as long as until the second data acquisition unit (12) receives from the first data acquisition unit (11) a termination signal which has been transmitted at the time when the first data acquisition unit (11) is no longer able to record information about voices or sounds on board the vehicle or vehicle data;
wherein the first data acquisition unit (11) is designed so that it transmits the termination signal when the first data acquisition unit (11) can no longer record information about voices or sounds on board the vehicle (100) or vehicle data; and
wherein the termination signal can be used to detect and verify that a data set of the second data acquisition unit (12) fully corresponds to a data set of the first data acquisition unit (11) and that all data recorded by the first data acquisition unit (11) are also recorded and stored by the second data acquisition unit (12).

2. Data acquisition unit (10) according to Claim 1,
wherein the termination signal defines an end time of the transmission of the vehicle data from the first data acquisition unit (11) to the second data acquisition unit (12) via the data link (15).

3. Data acquisition unit (10) according to either one of the preceding claims,
wherein the second data acquisition unit (12) is designed to store all vehicle data received from the first data acquisition unit (11) until reception of the termination signal.

4. Data acquisition unit (10) according to any one of the preceding claims,
wherein the first data acquisition unit (11) and/or the second data acquisition unit (12) is designed to actively establish the radio link (16) between the first data acquisition unit (11) and the second data acquisition unit (12) when a release of the second data acquisition unit (12) from the vehicle (100) is detected.

5. Data acquisition unit (10) according to any one of the preceding claims,
wherein, during the attached state (20), the first data acquisition unit (11) and the second data acquisition unit (12) are in a synchronization mode in which the vehicle data of the first data acquisition unit (11) and the second data acquisition unit (12) are continuously synchronized so that the first data acquisition unit (11) and the second data acquisition unit (12) always have an identical set of vehicle data in the attached state (20);
wherein, when the second data acquisition unit (12) is released from the vehicle (100), the first data acquisition unit (11) is designed to switch to a transmission mode in which the first data acquisition unit (11) transmits the vehicle data by means of the radio link (16) to the second data acquisition unit (12) in order to thus transmit all vehicle data acquired by the first data acquisition unit (11) to the second data acquisition unit (12).

6. Data acquisition unit (10) according to any one of the preceding claims,
wherein the data link (15) for transmitting the vehicle data between the first data acquisition unit (11) and the second data acquisition unit (12) in the released state (30) has a range of at least 10 metres, at least 100 metres, at least 1000 metres or at least 5000 metres.

7. Data acquisition unit (10) according to any one of the preceding claims,
wherein the data link (15) for transmitting the vehicle data between the first data acquisition unit (11) and the second data acquisition unit (12) in the released state (30) is provided by means of the radio link (16) based on a Ka band, a Ku band or an L band.

8. Data acquisition unit (10) according to any one of the preceding claims,
wherein the release mechanism (18) is further designed to release the attachment of the second data acquisition unit (12) to the vehicle (100) based on a position and/or orientation of the vehicle (100) relative to an impact object.

9. Data acquisition unit (10) according to any one of the preceding claims,
wherein the release mechanism (18) is further designed to release the attachment of the second data acquisition unit (12) to the vehicle (100) based on a calculated vehicle trajectory of the vehicle (100).

10. Data acquisition unit (10) according to any one of the preceding claims,
wherein the radio link (16) is a broadband radio link.

11. Data acquisition unit (10) according to any one of the preceding claims,
wherein the second data acquisition unit (12) has an absorption device (19) designed to bring about damping in the event of the second data acquisition unit impacting (12) on an impact object.

12. Data acquisition unit (10) according to any one of the preceding claims,
wherein the vehicle (100) is an aircraft (101); and/or wherein the vehicle data is aircraft data.

13. Method for acquiring vehicle data of a vehicle (100), comprising the following steps:
providing a first data acquisition unit (11) and a second data acquisition unit (12, S1);
connecting the first data acquisition unit (11) and the second data acquisition unit (12) via a data link (15) in order to thus transmit vehicle data from the first data acquisition unit (11) to the second data acquisition unit (12) (S2);
attaching the second data acquisition unit (12) to the vehicle (100) in an attached state (20, S3);
releasing the attachment of the second data acquisition unit (12) to the vehicle (100) in order to thus move the second data acquisition unit (12) to a released state (30) (S4);
releasing the attachment of the second data acquisition unit (12) to the vehicle (100) based on a forecast for a vehicle state of the vehicle (100, S5);
physically separating the second data acquisition unit (12) from the first data acquisition unit (11, S6); and maintaining the data link (15) for transmitting the vehicle data between the first data acquisition unit (11) and the second data acquisition unit (12) in the released state (30) by means of a radio link (16),
**characterized in that**
the data link (15) is maintained until a termination signal is received by the second data acquisition unit (12) from the first data acquisition unit (11, S7), which termination signal is transmitted at the time when the first data acquisition unit (11) can no longer record information about voices or sounds on board the vehicle or vehicle data;
wherein the termination signal can be used to detect and verify that a data set of the second data acquisition unit (12) fully corresponds to a data set of the first data acquisition unit (11) and that all data recorded by the first data acquisition unit (11) are also recorded and stored by the second data acquisition unit (12).

## Revendications

1. Système d'acquisition de données (10) pour l'acquisition de données de véhicule d'un véhicule (100), présentant :
une première unité d'acquisition de données (11) ;
une deuxième unité d'acquisition de données (12), laquelle est connectée à la première unité d'acquisition de données (11) par le biais d'une liaison de données (15), afin de transmettre ainsi des données de véhicule de la première unité d'acquisition de données (11) à la deuxième unité d'acquisition de données (12) ;
un mécanisme de fixation (17) qui est réalisé pour fixer la deuxième unité d'acquisition de données (12) au véhicule (100) dans un état fixé (20) ;
un mécanisme de détachement (18) qui est réalisé pour détacher la fixation de la deuxième unité d'acquisition de données (12) au véhicule (100) et pour transférer ainsi la deuxième unité d'acquisition de données (12) à un état détaché (30) dans lequel la deuxième unité d'acquisition de données (12) est séparée spatialement du véhicule (100) ;
le mécanisme de détachement (18) étant en outre réalisé pour détacher la fixation de la deuxième unité d'acquisition de données (12) au véhicule (100) sur la base d'une prévision d'un état de véhicule du véhicule (100) ;
la deuxième unité d'acquisition de données (12) étant réalisée pour maintenir, à l'aide d'une liaison radio (16), la liaison de données (15) permettant de transmettre les données de véhicule entre la première unité d'acquisition de données (11) et la deuxième unité d'acquisition de données (12) dans l'état détaché (30),
**caractérisé en ce que**
la deuxième unité d'acquisition de données (12) est réalisée pour maintenir la liaison de données (15) au moins jusqu'à ce que la deuxième unité d'acquisition de données (12) reçoive un signal d'interruption provenant de la première unité d'acquisition de données (11), lequel signal a été émis à l'instant auquel la première unité d'acquisition de données (11) ne peut plus enregistrer aucune information relative à des voix ou des bruits à bord du véhicule ou des données de véhicule ;
où la première unité d'acquisition de données (11) est réalisée de telle sorte qu'elle émet le signal d'interruption lorsque la première unité d'acquisition de données (11) ne peut plus enregistrer aucune information relative à des voix ou des bruits à bord du véhicule (100) ou des données de véhicule ; et
où, sur la base du signal d'interruption, il peut être détecté et vérifié qu'un ensemble de données de la deuxième unité d'acquisition de données (12) coïncide complètement avec un ensemble de données de la première unité d'acquisition de données (11) et que toutes les données qui ont été enregistrées par la première unité d'acquisition de données (11) sont également acquises et mémorisées par la deuxième unité d'acquisition de données (12).

2. Système d'acquisition de données (10) selon la revendication 1,
dans lequel le signal d'interruption définit un instant final de la transmission des données de véhicule de la première unité d'acquisition de données (11) à la deuxième unité d'acquisition de données (12) par le biais de la liaison de données (15).

3. Système d'acquisition de données (10) selon l'une quelconque des revendications précédentes,
dans lequel la deuxième unité d'acquisition de données (12) est réalisée pour mémoriser toutes les données de véhicule reçues par la première unité d'acquisition de données (11) jusqu'à la réception du signal d'interruption.

4. Système d'acquisition de données (10) selon l'une quelconque des revendications précédentes,
dans lequel la première unité d'acquisition de données (11) et/ou la deuxième unité d'acquisition de données (12) sont réalisées pour produire activement la liaison radio (16) entre la première unité d'acquisition de données (11) et la deuxième unité d'acquisition de données (12) lorsqu'un détachement de la deuxième unité d'acquisition de données (12) du véhicule (100) est détecté.

5. Système d'acquisition de données (10) selon l'une quelconque des revendications précédentes,
dans lequel la première unité d'acquisition de données (11) et la deuxième unité d'acquisition de données (12) se trouvent dans un mode de synchronisation pendant l'état fixé (20), mode dans lequel les données de véhicule de la première unité d'acquisition de données (11) et de la deuxième unité d'acquisition de données (12) sont continuellement synchronisées, de sorte que la première unité d'acquisition de données (11) et la deuxième unité d'acquisition de données (12) présentent, dans l'état fixé (20), toujours un ensemble identique de données de véhicule ;
dans lequel la première unité d'acquisition de données (11) est réalisée pour passer à un mode d'émission lors du détachement de la deuxième unité d'acquisition de données (12) du véhicule (100), mode dans lequel la première unité d'acquisition de données (11) envoie les données de véhicule à la deuxième unité d'acquisition de données (12) à l'aide de la liaison radio (16), afin de transmettre ainsi toutes les données de véhicule acquises par la première unité d'acquisition de données (11) à la deuxième unité d'acquisition de données (12).

6. Système d'acquisition de données (10) selon l'une quelconque des revendications précédentes,
dans lequel la liaison de données (15) permettant de transmettre les données de véhicule entre la première unité d'acquisition de données (11) et la deuxième unité d'acquisition de données (12) dans l'état détaché (30) présente une portée d'au moins 10 mètres, d'au moins 100 mètres, d'au moins 1000 mètres ou d'au moins 5000 mètres.

7. Système d'acquisition de données (10) selon l'une quelconque des revendications précédentes,
dans lequel la liaison de données (15) permettant de transmettre les données de véhicule entre la première unité d'acquisition de données (11) et la deuxième unité d'acquisition de données (12) dans l'état détaché (30) est fournie à l'aide de la liaison radio (16) sur la base d'une bande Ka, d'une bande Ku ou d'une bande L.

8. Système d'acquisition de données (10) selon l'une quelconque des revendications précédentes,
dans lequel le mécanisme de détachement (18) est en outre réalisé pour détacher la fixation de la deuxième unité d'acquisition de données (12) au véhicule (100) sur la base d'une position et/ou d'une orientation du véhicule (100) par rapport à un objet de collision.

9. Système d'acquisition de données (10) selon l'une quelconque des revendications précédentes,
dans lequel le mécanisme de détachement (18) est en outre réalisé pour détacher la fixation de la deuxième unité d'acquisition de données (12) au véhicule (100) sur la base d'une trajectoire calculée du véhicule (100).

10. Système d'acquisition de données (10) selon l'une quelconque des revendications précédentes,
dans lequel la liaison radio (16) est une liaison radio à large bande.

11. Système d'acquisition de données (10) selon l'une quelconque des revendications précédentes,
dans lequel la deuxième unité d'acquisition de données (12) présente un dispositif d'interception (19) qui est réalisé pour provoquer un amortissement dans le cas d'une collision de la deuxième unité d'acquisition de données (12) avec un objet de collision.

12. Système d'acquisition de données (10) selon l'une quelconque des revendications précédentes,
dans lequel le véhicule (100) est un aéronef (101) ; et/ou
dans lequel les données de véhicule sont des données d'aéronef.

13. Procédé d'acquisition de données de véhicule d'un véhicule (100), présentant les étapes suivantes :
fourniture d'une première unité d'acquisition de données (11) et d'une deuxième unité d'acquisition de données (12, S1) ;
liaison de la première unité d'acquisition de données (11) et de la deuxième unité d'acquisition de données (12) par le biais d'une liaison de données (15), afin de transmettre ainsi des données de véhicule de la première unité d'acquisition de données (11) à la deuxième unité d'acquisition de données (12) (S2) ;
fixation de la deuxième unité d'acquisition de données (12) au véhicule (100) dans un état fixé (20, S3) ;
détachement de la fixation de la deuxième unité d'acquisition de données (12) au véhicule (100), afin de transférer ainsi la deuxième unité d'acquisition de données (12) à un état détaché (30) (S4) ;
détachement de la fixation de la deuxième unité d'acquisition de données (12) au véhicule (100) sur la base d'une prévision pour un état du véhicule (100, S5) ;
séparation spatiale de la deuxième unité d'acquisition de données (12) de la première unité d'acquisition de données (11, S6) ; et
maintien, à l'aide d'une liaison radio (16), de la liaison de données (15) permettant de transmettre les données de véhicule entre la première unité d'acquisition de données (11) et la deuxième unité d'acquisition de données (12) dans l'état détaché (30),
**caractérisé en ce que**
la liaison de données (15) est maintenue par la première unité d'acquisition de données (11, S7) jusqu'à la réception d'un signal d'interruption par la deuxième unité d'acquisition de données (12), lequel signal est émis à l'instant auquel la première unité d'acquisition de données (11) ne peut plus enregistrer aucune information relative à des voix ou des bruits à bord du véhicule ou des données de véhicule ;
où, sur la base du signal d'interruption, il peut être détecté et vérifié qu'un ensemble de données de la deuxième unité d'acquisition de données (12) coïncide complètement avec un ensemble de données de la première unité d'acquisition de données (11) et que toutes les données qui ont été enregistrées par la première unité d'acquisition de données (11) sont également acquises et mémorisées par la deuxième unité d'acquisition de données (12) .
